# FASCICULE DE BREVET EUROPEEN

(11) **EP 3 833 594 B1**
(45) Date de publication et mention de la délivrance du brevet: **11.10.2023**
(21) Numéro de dépôt: 19748580.8
(22) Date de dépôt: 05.07.2019
(51) Int. Cl.: B62D 35/02, B60R 13/08, B62D 65/02, B62D 65/16

(54) **ASSEMBLAGE SIMPLIFIE D'UN PANNEAU DE PROTECTION SOUS-MOTEUR SUR VEHICULE AUTOMOBILE ET METHODE D'ASSEMBLAGE**
VEREINFACHTER ZUSAMMENBAU EINER ABDECKUNG UNTER DEM MOTOR EINES FAHRZEUGES UND MONTAGEVERFAHREN
EASIER ASSEMBLY OF A ENGINE UNDERCOVER FOR A VEHICLE AND ASSEMBLY PROZESS

(30) Priorité: 07.08.2018 FR 1857361
(43) Date de publication de la demande: 16.06.2021
(73) Titulaire: PSA Automobiles SA, 78300 Poissy (FR)
(72) Inventeur: GIRAUDON, Quentin, 25600 BROGNARD (FR); BREAL, Ronan, 25200 BETHONCOURT (FR)
(86) Numéro de dépôt international: PCT/FR2019/051672
(87) Numéro de publication internationale: WO 2020/030862

(56) Documents cités:
- EP-A1- 2 623 401
- DE-U1-202014 001 822
- US-A1- 2005 067 204

## Description

L'invention a trait au domaine des véhicules automobiles, plus particulièrement au domaine des panneaux de protection sous-moteur des véhicules automobiles.

Les véhicules automobiles comprennent généralement un panneau de protection sous-moteur disposé sous le véhicule et fixé à une traverse inférieure de façade avant du véhicule. Lors de l'assemblage des panneaux de protection sur les traverses de véhicules automobiles sur une ligne d'assemblage, certains panneaux de protection peuvent tomber du véhicule avant leur fixation audit véhicule, notamment en raison des mouvements subits lors du déplacement sur la ligne d'assemblage. Cela peut entrainer alors un risque de perturbation de la ligne d'assemblage et un risque de sécurité pour l'opérateur en charge du montage.

Le document de brevet publié FR 2 987 806 A1 divulgue un dispositif composé d'un carénage arrière ou panneau de protection arrière sous-véhicule et d'un déflecteur disposé derrière le panneau de protection et recouvrant au moins un rebord arrière dudit panneau. Le panneau de protection et le déflecteur sont deux pièces distinctes et comprennent chacun des bossages formant par paire un canal d'écoulement d'air. Le panneau de protection comprend des nervures longitudinales logées dans des protubérances du déflecteur. Le dispositif comprend une poutre de renfort montée en appui contre une face intérieure du panneau de protection. La poutre de renfort comprend des évidements pour la fixation du panneau de protection sur la poutre.

Le document de brevet publié US 2017/0120969 A1 divulgue un panneau de protection sous-moteur d'un véhicule automobile. Le panneau de protection sous-moteur est composé d'une première et d'une deuxième section. Le panneau de protection sous-moteur comprend un ensemble de nervures parallèles à la direction du véhicule automobile. Les première et deuxième sections du panneau sont assemblées par des moyens de fixations tels que des vis et des écrous.

Le document EP2623401 décrit un panneau de protection sous-moteur fixé à une traverse avant.

L'état de l'art précédemment cité ne divulgue pas de solution permettant d'assurer un maintien suffisant des panneaux de protection sous-moteur lors de leur assemblage sur le véhicule automobile et plus particulièrement sur les traverses inférieures de la façade avant des véhicules automobiles.

L'invention a pour objectif de pallier au moins un des inconvénients de l'état de la technique susmentionné. Plus particulièrement, l'invention a pour objectif de fournir une solution permettant d'assurer un maintien suffisant d'un panneau de protection sous-moteur sur un véhicule automobile lors de son assemblage sur le véhicule. L'invention a également pour objectif une solution simple, économique et robuste.

L'invention a pour objet un véhicule automobile comprenant une traverse inférieure de façade avant, un panneau de protection sous-moteur, remarquable en ce que le panneau comprend un bord avant avec des crochets engageant, respectivement, avec des ajours dans la traverse inférieure de façade avant ; lesdits crochets et lesdits ajours étant en forme de L de manière à permettre, lors du montage du panneau sur le véhicule, une insertion verticale des crochets dans les ajours suivie d'une translation longitudinale de manière à assurer une retenue transversale desdits crochets. Chacun des crochets comprend une branche longitudinale, une branche transversale et terminale, et un coude reliant lesdites branches, lesdites branches et ledit coude correspondant à la forme en L dudit crochet.

Selon un mode avantageux de l'invention, la forme en L des ajours est opposée à la forme en L des crochets de manière à nécessiter, lors du montage du panneau sur le véhicule, entre l'insertion verticale et la translation longitudinale des crochets dans les ajours, une translation transversale desdits crochets.

Selon un mode avantageux de l'invention, la traverse inférieure de façade avant présente une surface supérieure avec des zones de contact avec les crochets, lesdites zones présentant une pente favorisant la translation longitudinale des crochets.

Selon un mode avantageux de l'invention, les zones de contact avec les crochets forment, chacune, un ressaut entre une position desdits crochets résultant de la translation transversale et une position desdits crochets résultant de la translation longitudinale.

Selon un mode avantageux de l'invention, pour chacun des crochets, le coude est un premier coude, la branche longitudinale présentant un deuxième coude adjacent au premier coude.

Selon un mode avantageux de l'invention, chacun des ajours comprend une portion transversale et une portion longitudinale, lesdites portions formant la forme en L dudit ajour.

Selon un mode avantageux de l'invention, les portions transversales des ajours sont orientées de manière opposée aux branches transversales et terminales des crochets et/ou les portions longitudinales des ajours sont orientées de manière opposée aux branches longitudinales des crochets.

L'invention a également pour objet un procédé de montage d'un panneau de protection sous-moteur sur un véhicule automobile, comprenant les étapes suivantes : (a) mise en place du panneau sous-moteur sur le véhicule ; et (b) fixation du panneau sous-moteur ; remarquable en ce que le véhicule est selon l'invention; et que l'étape (a) comprend les sous-étapes suivantes : insertion verticale des crochets dans les ajours de la traverse de façade avant alors que le panneau est vertical ; translation longitudinale du panneau et des crochets ; pivotement du panneau autour des crochets, vers le dessous du véhicule.

Selon un mode avantageux de l'invention, l'étape (a) comprend une sous-étape intermédiaire entre les sous-étapes d'insertion et de translation : translation transversale des crochets et du panneau.

Les mesures de l'invention sont intéressantes en ce que le panneau de protection comprend des crochets en L coopérant avec des ajours en L de la traverse, assurant une retenue transversale des crochets et donc une retenue du panneau sur la traverse, avant sa fixation. L'invention évite ainsi qu'un panneau de protection sous-moteur ne tombe lors de l'assemblage sur la traverse d'un véhicule automobile d'une ligne de montage ou d'assemblage. L'invention augmente ainsi la sécurité pour un opérateur en charge du montage du panneau sur le véhicule. L'invention facilite également l'assemblage dans la mesure où elle permet un bon positionnement du panneau sur la traverse et évite de réajuster la position du panneau de protection sur la traverse, avant sa fixation. L'invention présente également l'avantage d'être simple à mettre en oeuvre et peu coûteuse.

D'autres caractéristiques et avantages de la présente invention seront mieux compris à l'aide de la description et des dessins parmi lesquels :
- La figure 1 représente un panneau de protection sous-moteur d'un véhicule automobile assemblé à une traverse inférieure de façade avant de véhicule automobile, conformément à l'invention ;
- La figure 2 représente le panneau de protection sous-moteur de la figure 1 ;
- Les figures 3 à 6 représentent différentes étapes de l'assemblage du panneau de protection sous-moteur sur la traverse inférieure de façade avant, conformément à l'invention.

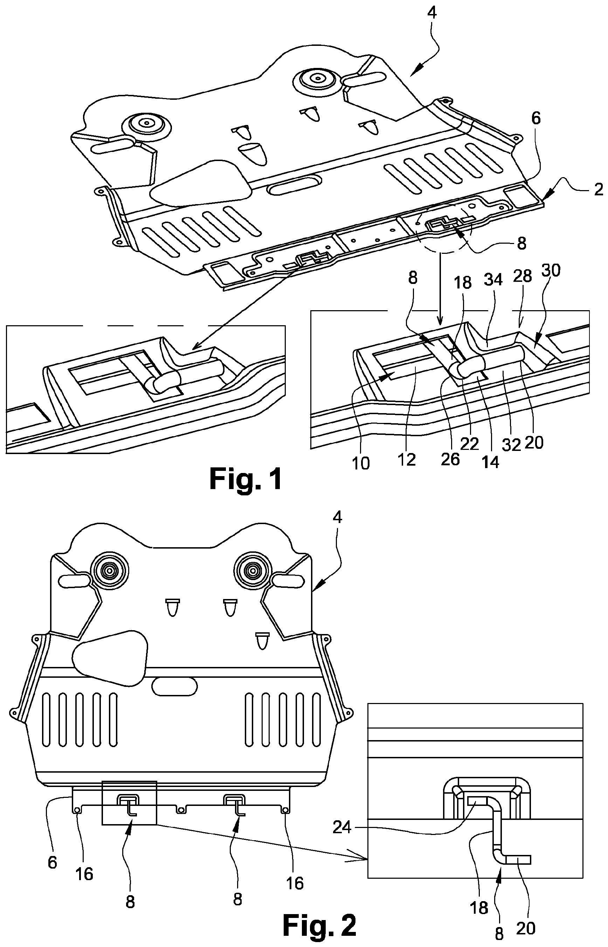

La figure 1 représente une traverse inférieure 2 de façade avant d'un véhicule automobile et un panneau 4 de protection sous-moteur. La figure 2 représente le panneau 4 de protection sous-moteur seul. Les figures 1 et 2 seront décrites ensemble.

Le panneau 4 de protection sous-moteur est en métal. Le panneau 4 comprend un bord avant 6 avec des crochets 8 engageant, respectivement, avec des ajours 10 dans la traverse inférieure 2 de façade avant. Les crochets 8 et les ajours 10 sont en forme de L de manière à permettre, lors du montage du panneau 4 sur le véhicule, une insertion verticale des crochets dans les ajours suivie d'une translation longitudinale de manière à assurer une retenue transversale desdits crochets.

Chacun des ajours 10 comprend une portion longitudinale 12 et une portion transversale 14, lesdites portions 12 et 14 formant la forme en L dudit ajour 10.

Selon un mode de réalisation préféré de l'invention et tel qu'illustré à la figure 1, la forme en L des ajours 10 est opposée à la forme en L des crochets 8 de manière à nécessiter, lors du montage du panneau 4 sur le véhicule, entre l'insertion verticale et la translation longitudinale des crochets 8 dans les ajours 10, une translation transversale desdits crochets 8.

Les crochets 8 sont soudés sur le panneau de protection 4.

Le bord avant 6 du panneau 4 comprend deux crochets 8. Le bord avant 6 du panneau de protection 4 sous-moteur comprend également des orifices de fixation 16 à la traverse 2. Tel qu'il est visible à la figure 2, le bord avant 6 du panneau 4 comprend deux crochets 8, chacun étant disposé de manière centrée entre deux orifices de fixation 16.

Chacun des crochets 8 comprend une branche longitudinale 18 et une branche transversale et terminale 20. Les termes « longitudinal » et « transversal » sont en relation avec le véhicule automobile. Un coude 22 relie la branche longitudinale 18 à la branche transversale et terminale 20. Lesdites branches 18, 20 et ledit coude 22 correspondent à la forme en L dudit crochet 8. Le coude 22 forme un angle compris entre 80° et 100°.

Chaque crochet 8 présente une branche transversale 24 à l'opposé de la branche transversale et terminale 20, ladite branche 24 s'étendant dans une direction opposée à ladite branche terminale (figure 2). La branche transversale 24 opposée à la branche transversale et terminale 20 est fixée au bord avant 6 du panneau 4 de protection sous-moteur.

Les portions transversales 14 des ajours 10 sont orientées de manière opposée aux branches transversales et terminales 20 des crochets 8 et/ou les portions longitudinales 12 des ajours 10 sont orientées de manière opposée aux branches longitudinales 18 des crochets 8.

Pour chacun des crochets 8, le coude 22 est un premier coude, la branche longitudinale 18 présentant un deuxième coude 26 adjacent au premier coude 22. Le deuxième coude 26 forme, entre la branche longitudinale 18 et la branche transversale et terminale 20, un angle compris entre 110° et 145°.

La traverse inférieure 2 de façade avant présente une surface supérieure 28 avec des zones de contact 30 avec les crochets 8. Les zones de contact 30 présentent une pente 32 favorisant la translation longitudinale des crochets 8.

Les zones de contact 30 avec les crochets 8 forment, chacune, un ressaut 34 entre une position desdits crochets 8 résultant de la translation transversale et une position desdits crochets résultant de la translation longitudinale. Le ressaut 34 assure un blocage longitudinal des crochets 8.

Les zones de contact 30 avec les crochets 8 sont réalisées par emboutissage de la surface supérieure 28 de la traverse 2.

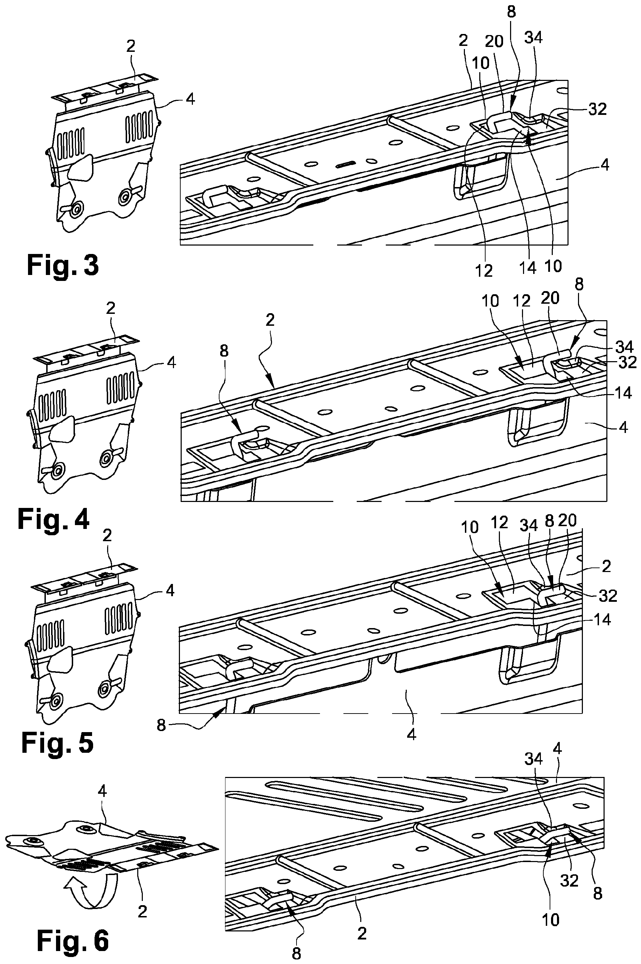

Les figures 3 à 6 représente différentes étapes du procédé de montage du panneau 4 de protection sous-moteur sur un véhicule automobile, selon l'invention.

Le procédé de montage comprend une étape (a) de mise en place du panneau 4 de protection sous-moteur sur le véhicule et une étape (b) de fixation du panneau de protection sous-moteur 4.

L'étape (a) de mise en place du panneau 4 sous-moteur sur le véhicule comprend une sous-étape consistant en l'insertion verticale des crochets 8 dans les ajours 10 de la traverse 2 de façade avant alors que le panneau 4 est vertical. Cette sous-étape est illustrée à la figure 3. Les crochets 8 sont insérés dans les ajours 10 par insertion des branches transversales et terminales 20 dans les portions longitudinales 12 des ajours 10

Après insertion, une translation transversale des crochets 8 et du panneau 4 est effectuée. Cette sous-étape est illustrée à la figure 4. Lors de cette sous-étape, les crochets 8 sont déplacés au-dessus du ressaut 34.

La translation transversale est suivie d'une translation longitudinale du panneau 4 et des crochets 8 comme illustré à la figure 5. Chaque crochet 8 glisse le long de la portion transversale 14 des ajours 10, assurant ainsi une retenue transversale de chaque crochet 8. La pente 32 favorise la translation longitudinale du crochet 8 correspondant. Chaque pente 32 est orientée de manière à faire glisser les crochets 8 en direction des ressauts 34. Le panneau glisse le long des pentes 32 par son propre poids et les crochets 8 viennent en butée contre les ressauts 34.

En raison de la forme en L opposée des crochets 8 et des ajours 10, dans le mode de réalisation tel que décrit, l'étape a) comprend une sous-étape de translation transversale. Cependant, dans le cas par exemple où les formes en L des crochets 8 et des ajours 10 ne sont pas opposées, l'étape a) du procédé comprend une sous-étape d'insertion des crochets suivie d'une sous-étape de translation longitudinale, telles que précédemment citées.

Après la translation longitudinale, l'assemblage comprend une sous-étape de pivotement du panneau 4 autour des crochets 8, vers le dessous du véhicule, comme illustré à la figure 6.

Une fois pivoté, le panneau 4 de protection sous-moteur est fixé à la traverse et sous le véhicule automobile.

## Revendications

1. Véhicule automobile comprenant :
- une traverse inférieure (2) de façade avant,
- un panneau (4) de protection sous-moteur,
**caractérisé en ce que** le panneau (4) comprend un bord avant (6) avec des crochets (8) engageant, respectivement, avec des ajours (10) dans la traverse inférieure de façade avant ; lesdits crochets (8) et lesdits ajours (10) étant en forme de L de manière à permettre, lors du montage du panneau (4) sur le véhicule, une insertion verticale des crochets (8) dans les ajours (10) suivie d'une translation longitudinale de manière à assurer une retenue transversale desdits crochets (8), chacun des crochets (8) comprenant une branche longitudinale (18), une branche transversale et terminale (20), et un coude (22) reliant lesdites branches (18, 20), lesdites branches (18, 20) et ledit coude (22) correspondant à la forme en L dudit crochet (8).

2. Véhicule selon la revendication 1, **caractérisé en ce que** la forme en L des ajours (10) est opposée à la forme en L des crochets (8) de manière à nécessiter, lors du montage du panneau (4) sur le véhicule, entre l'insertion verticale et la translation longitudinale des crochets (8) dans les ajours (10), une translation transversale desdits crochets (8).

3. Véhicule selon l'une des revendications 1 à 2, **caractérisé en ce que** la traverse inférieure (2) de façade avant présente une surface supérieure (28) avec des zones de contact (30) avec les crochets (8), lesdites zones (30) présentant une pente (32) favorisant la translation longitudinale des crochets (8).

4. Véhicule selon la revendication 3, **caractérisé en ce que** les zones de contact (30) avec les crochets (8) forment, chacune, un ressaut (34) entre une position desdits crochets (8) résultant de la translation transversale et une position desdits crochets (8) résultant de la translation longitudinale.

5. Véhicule selon l'une des revendications de 1 à 4, **caractérisé en ce que** pour chacun des crochets (8), le coude (22) est un premier coude, la branche longitudinale (18) présentant un deuxième coude (26) adjacent au premier coude (22).

6. Véhicule selon l'une des revendications 1 à 5, **caractérisé en ce que** chacun des ajours (10) comprend une portion transversale (14) et une portion longitudinale (12), lesdites portions (12, 14) formant la forme en L dudit ajour.

7. Véhicule selon la revendication 6, **caractérisé en ce que** les portions transversales (14) des ajours (10) sont orientées de manière opposée aux branches transversales et terminales (20) des crochets (8) et/ou les portions longitudinales (12) des ajours (10) sont orientées de manière opposée aux branches longitudinales (18) des crochets (8).

8. Procédé de montage d'un panneau (4) de protection sous-moteur sur un véhicule automobile, comprenant les étapes suivantes :
(a) mise en place du panneau (4) sous-moteur sur le véhicule ; et
(b) fixation du panneau (4) sous-moteur ;
**caractérisé en ce que** le véhicule est selon l'une des revendications 1 à 7 ; et que l'étape (a) comprend les sous-étapes suivantes :
- insertion verticale des crochets (8) dans les ajours (10) de la traverse (2) de façade avant alors que le panneau (4) est vertical ;
- translation longitudinale du panneau (4) et des crochets (8) ;
- pivotement du panneau (4) autour des crochets (8), vers le dessous du véhicule.

9. Procédé selon la revendication 8, **caractérisé en ce que** l'étape (a) comprend une sous-étape intermédiaire entre les sous-étapes d'insertion et de translation :
- translation transversale des crochets (8) et du panneau (4).

## Patentansprüche

1. Kraftfahrzeug mit:
- einem unteren vorderen Fassadenquerträger (2),
- einer Untermotorschutzwand (4),
**dadurch gekennzeichnet, dass** die Platte (4) eine vordere Kante (6) mit Haken (8) aufweist, die jeweils mit Durchbrüchen (10) in der unteren vorderen Fassadenquerung in Eingriff stehen; wobei die Haken (8) und die Durchbrüche (10) L-förmig sind, sodass beim Anbringen der Platte (4) an dem Fahrzeug ein vertikales Einsetzen der Haken (8) in die Durchbrüche (10) gefolgt von einer Längsverschiebung ermöglicht wird, sodass ein Querhalt der Haken (8) gewährleistet ist, wobei jeder der Haken (8) einen Längsschenkel (18), einen Querschenkel und einen Querschenkel aufweist Endgerät (20) und einen die Schenkel (18, 20) verbindenden Knick (22), wobei die Schenkel (18, 20) und der Knick (22) der L-Form des Hakens (8) entsprechen.

2. Fahrzeug nach Anspruch 1, **dadurch gekennzeichnet, dass** die L-Form der Durchbrüche (10) der L-Form der Haken (8) derart gegenüberliegt, dass beim Anbringen der Platte (4) am Fahrzeug zwischen dem vertikalen Einsetzen und der Längsverschiebung der Haken (8) in den Durchbrüchen (10) eine Querverschiebung der Haken (8) erforderlich ist.

3. Fahrzeug nach einem der Ansprüche 1 bis 2, **dadurch gekennzeichnet, dass** der untere vordere Fassadenquerträger (2) eine obere Fläche (28) mit Kontaktbereichen (30) mit den Haken (8) aufweist, wobei die Bereiche (30) eine Neigung (32) aufweisen, die die Längsverschiebung der Haken (8) begünstigt.

4. Fahrzeug nach Anspruch 3, **dadurch gekennzeichnet, dass** die Kontaktbereiche (30) mit den Haken (8) jeweils einen Vorsprung (34) zwischen einer Position der Haken (8), die sich aus der Querverschiebung ergibt, und einer Position der Haken (8), die sich aus der Längsverschiebung ergibt, bilden.

5. Fahrzeug nach einem der Ansprüche 1 bis 4, **dadurch gekennzeichnet, dass** für jeden der Haken (8) der Knick (22) ein erster Knick ist, wobei der Längsschenkel (18) einen zweiten, an den ersten Knick (22) angrenzenden Knick (26) aufweist.

6. Fahrzeug nach einem der Ansprüche 1 bis 5, **dadurch gekennzeichnet, dass** jeder der Durchbrüche (10) einen Querabschnitt (14) und einen Längsabschnitt (12) umfasst, wobei die Abschnitte (12, 14) die L-Form des Durchbruchs bilden.

7. Fahrzeug nach Anspruch 6, **dadurch gekennzeichnet, dass** die Querabschnitte (14) der Durchbrüche (10) entgegengesetzt zu den Quer- und Endschenkeln (20) der Haken (8) und/oder die Längsabschnitte (12) der Durchbrüche (10) entgegengesetzt zu den Längsschenkeln (18) der Haken (8) ausgerichtet sind.

8. Verfahren zum Anbringen einer Untermotor-Schutzplatte (4) an einem Kraftfahrzeug, das die folgenden Schritte umfasst:
(a) Anbringen der Untermotorblende (4) am Fahrzeug; und
(b) Befestigung der Untermotorblende (4);
Fahrzeug nach einem der Ansprüche 1 bis 7, **dadurch gekennzeichnet, dass** Schritt (a) die folgenden Unterschritte umfasst:
- Vertikales Einsetzen der Haken (8) in die Durchbrüche (10) der vorderen Fassadenstange (2), während die Platte (4) vertikal ist;
- Längsverschiebung der Platte (4) und der Haken (8);
- Die Platte (4) wird um die Haken (8) nach unten geschwenkt.

9. Verfahren nach Anspruch 8, **dadurch gekennzeichnet, dass** der Schritt (a) einen Zwischen-Unterschritt zwischen den Einfüge- und Translations-Unterschritten umfasst:
- Querverschiebung der Haken (8) und der Platte (4).

## Claims

1. Motor vehicle comprising:
- front facade lower cross-member (2),
- a sub-motor protection panel (4),
**characterized in that** the panel (4) comprises a front edge (6) with hooks (8) engaging, respectively, with openings (10) in the lower cross-member of the front façade; said hooks (8) and said openings (10) being L-shaped so as to allow, during the mounting of the panel (4) on the vehicle, a vertical insertion of the hooks (8) in the openings (10) followed by a longitudinal translation so as to ensure a transverse retention of said hooks (8), each of the hooks (8) comprising a longitudinal branch (18), a transverse and terminal branch (20), and an elbow (22) connecting said branches (18, 20), said branches (18, 20) and said elbow (22) corresponding to the L shape of said hook (8).

2. Vehicle according to Claim 1, **characterized in that** the L-shape of the openings (10) is opposite to the L-shape of the hooks (8) so as to require, during the mounting of the panel (4) on the vehicle, between the vertical insertion and the longitudinal translation of the hooks (8) in the openings (10), a transverse translation of the said hooks (8).

3. Vehicle according to one of Claims 1 to 2, **characterized in that** the lower cross-member (2) of the front facade has an upper surface (28) with zones (30) of contact with the hooks (8), the said zones (30) having a slope (32) promoting the longitudinal translation of the hooks (8).

4. Vehicle according to Claim 3, **characterized in that** the zones of contact (30) with the hooks (8) each form a projection (34) between a position of the said hooks (8) resulting from the transverse translation and a position of the said hooks (8) resulting from the longitudinal translation.

5. Vehicle according to one of Claims 1 to 4, **characterized in that**, for each of the hooks (8), the elbow (22) is a first elbow, the longitudinal branch (18) having a second elbow (26) adjacent to the first elbow (22).

6. Vehicle according to one of Claims 1 to 5, **characterized in that** each of the openings (10) comprises a transverse portion (14) and a longitudinal portion (12), the said portions (12, 14) forming the L-shape of the said opening.

7. Vehicle according to claim 6, **characterized in that** the transverse portions (14) of the openings (10) are oriented opposite the transverse and terminal branches (20) of the hooks (8) and/or the longitudinal portions (12) of the openings (10) are oriented opposite the longitudinal branches (18) of the hooks (8).

8. Method for mounting a sub-engine protection panel (4) on a motor vehicle, comprising the following steps:
(a) installation of the sub-engine panel (4) on the vehicle; and
(b) fixing of the sub-motor panel (4);
**characterized in that** the vehicle is according to one of claims 1 to 7; and **in that** step (a) comprises the following sub-steps:
- vertical insertion of the hooks (8) into the openings (10) of the front-facing cross-member (2) while the panel (4) is vertical;
- longitudinal translation of the panel (4) and hooks (8);
- pivoting of the panel (4) about the hooks (8), towards the bottom of the vehicle.

9. Method according to Claim 8, **characterized in that** step (a) comprises an intermediate substep between the insertion and translation substeps:
- transverse translation of the hooks (8) and of the panel (4).
